Europäisches Patentamt

European Patent Office

Office européen des brevets

(11) Publication number: **0 099 341**
**B1**

(12) **EUROPEAN PATENT SPECIFICATION**

(45) Date of publication of patent specification: **26.09.90**

(21) Application number: **83830134.9**

(22) Date of filing: **28.06.83**

(60) Divisional application 90101121.3 filed on 28/06/83.

(51) Int. Cl.⁵: **H 04 N 9/00**

(54) Method of transmitting and receiving compatible color television signals on two channels for broadcasting from satellite and apparatus for carrying out said method.

(30) Priority: **07.07.82 IT 2227682**

(43) Date of publication of application:
**25.01.84 Bulletin 84/04**

(45) Publication of the grant of the patent:
**26.09.90 Bulletin 90/39**

(84) Designated Contracting States:
**DE FR GB**

(56) References cited:
**GB-A-2 075 790**
**THE RADIO AND ELECTRONIC ENGINEER, vol. 52, no. 7, July 1982, pages 311-313; IERE; London, GB; "Television systems for DBS"**
**NHK, Laboratories Note, Serial no. 239, August 1979, pages 1-17, Tokyo, JP; T.FUJIO et al.:"High-definition television system - Signal standard and transmission"**
**FERNSEH UND KINOTECHNIK, vol. 36, no. 3, March 1982, pages 99-102, Berlin, DE; H. AMOR: "Untersuchungen zur kompatiblen Uebertragung hochaufgelöster Bilder"**

(73) Proprietor: **RAI-RADIOTELEVISIONE ITALIANA**
**Viale Mazzini 14**
**I-00195 Roma (IT)**

(72) Inventor: **D'Amato, Paolo**
**Via Monte Ortigara, 35**
**I-10100 Torino (IT)**
Inventor: **Salvadorini, Rolando**
**Via Ventimiglia 98**
**I-10100 Torino (IT)**

(74) Representative: **Forattini, Amelia et al**
**c/o Internazionale Brevetti Ingg. ZINI, MARANESI & C. S.r.l. Piazza Castello 1**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 099 341 B1

## Description

The present invention relates to the transmission and reception of color television signals.

It is well known that by the present color television transmission methods it is not possible to offer the user a television signal which is free of cross-color and cross-luminance defects due to interlacing of luminance and chrominance spectra. This is due to the fact that at present the color television signals are transmitted on a single channel and any attempt to eliminate said defects would bring to such complications as to discourage any approach in this sense. The difficulty could be overcome by subdividing the color television signal in two channels, but this would involve the requirement of modifying the present television standards with all the complications which would derive therefrom.

These considerations apply, however, only to transmissions of color television signals in the normal earth network.

For direct broadcasting from satellite, which is a new service which has not yet been adopted in any European country, it is possible to imagine different standards provided they are compatible with the standard rules established by WARC-77. One of these rules is that the interferences produced by the new signal on other channels must not be higher than those produced by a normal NTSC, PAL or SECAM signal. It is easily understood that once these rules are met the broadcasting from satellite, by making possible the transmission on a plurality of channels, makes it possible to furnish the users with a signal having a higher quality than the present signals.

In order to improve the quality of television when directly broadcasting from satellite, a method called Extended PAL Video Coding has been proposed (see The Radio and Electronic Engineer—Volume 52, Number 7, July 1982, pages 311—313: "Television Systems for DBS"). In this method cross-color is avoided by filtering off the portion of high-frequency luminance above 3.5 MHz, and by shifting this removed portion to a higher band. The receiver, after separating the chrominance from the low-frequency luminance, then reconstitutes the full spectrum of the low and the high frequency luminance, thus obtaining a higher degree of picture detail than possible with present bandwidths. However, while improving the quality offered to the new special receivers designed for the new standard, this method reduces the quality of pictures received by present standard receivers.

It is an object of the present invention to provide a method of transmitting color television signals for broadcasting from satellite comprising the steps of transmitting the television signal on two channels, in a manner compatible with NTSC, PAL or SECAM standards.

According to the invention, a normal NTSC, PAL or SECAM signal is transmitted in the first channel so that said signal can be received if one renounces to receive the improved signal due to the transmission on two channels, by a normal television set.

More particularly, the method of transmitting color television signals for broadcasting from statellite according to the invention is characterized in that it comprises the steps of transmitting on the first channel the complete color television signal and on the second channel the baseband chrominance R—Y and B—Y signals from 0 to about 3 MHz sequentially on alternate lines and from 3 MHz up to the limit of the video band the high frequency components of the luminance signal.

It is a further object of the invention an apparatus for carrying out the method.

The invention will be better understood from the following detailed description, given merely by way of example and therefore in no limiting sense, of one embodiment thereof referring to the accompanying drawing in which:

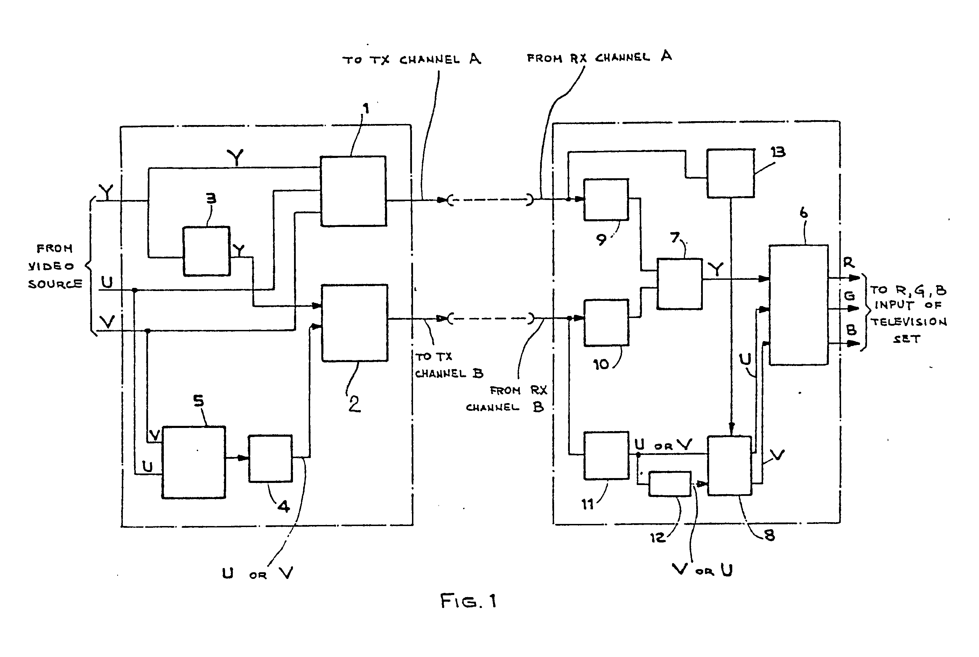

Figure 1 is a block diagram of a compatible apparatus according to the invention.

Referring to Figure 1, the transmitter of the compatible system comprises an encoder (NTSC, PAL or SECAM) 1 having three inputs for applying thereto the three Y, U and V signals and an output connected to the transmitting apparatus TX for a first channel referred to as A. This transmitter comprises also an adder 2 having 2 inputs one of which is connected to the output of a high pass filter 3 having the Y signal applied to its input, whereas the other input is connected to the output of a low pass filter 4 having the input connected to the output of a sequential switch 5 having two inputs for applying thereto the U and V signals. The output of the adder 2 is connected to the transmitting apparatus TX for the second channel referred to as B.

The signal appearing in the channel A is a normal NTSC, PAL or SECAM signal suitable for normal television sets. It can be therefore, in the receiving apparatus, VHF or UHF vestigial band modulated and sent directly to the antenna terminal of the television set. Those who desire to receive the improved quality signal must provide a special adapter capable of using both transmitted signals (that on the channel A and that on the channel B). This adapter can be connected to a television set provided with a low frequency R, G, B input.

The adapter comprises a matrix 6 having three inputs, one of which is connected to the output of an adder 7 whereas the other two are each connected to an output of a switch 8. The adder 7 has two inputs, one of which is connected to the output of a low pass filter 9 having the signal received by the receiving apparatus RX for the channel A applied to its input, whereas the other is connected to the output of a high pass filter having the signal received by the receiving apparatus RX for the channel B applied to its input. The switch 8 has two inputs, one of which is connected directly to the output of a low pass filter 11 having the signal received by the receiving apparatus RX for the channel B applied to its input, whereas the other is connected to said output of the filter 11 through a delay line 12. The receiver comprises also a detector 13 of the NTSC, PAL or SECAM alternance having the signal received on the channel A applied to its input and having the output connected to a third input of the switch 8. The matrix 6 has three outputs connected to the input R, G, B of the television set.

The described apparatus operates as follows:

On the channel A there is transmitted the NTSC, PAL or SECAM SIGNAL. On the channel B there are transmitted from 0 to about 3 MHz the baseband R—X and B—Y signals sequentially on alternate lines and from 3 MHz to about the limit of the available band in the channel the high frequency components of the luminance signal which are present in the channel A but are not usable because mixed with the chrominance signal.

The adapter according to the invention receives the luminance components from 0 to about 3 MHz from the channel A and those from 3 MHz on from the channel B and receives in addition the chrominance components from the channel B. In this manner the cross-color and cross-luminance defects are eliminated which are due to the interlacing of the luminance and chrominance spectra present either with NTSC, SECAM or PAL.

It is in addition possible, if the channel B permits it, to transmit luminance components having a higher frequency than the nominal limit of the video band.

In an apparatus made according to the diagram of Figure 1 the high pass filter 3 had a cut-off frequency $f_T \cong 3,5$ MHz, the low pass filter 4 had $f_T \cong 3$ MHz, the complementary high pass and low pass filters 10 and 9 respectively had $f_T \cong 3,8$ MHz and the low pass filter 11 had $f_T \cong 3,2$ MHz and the delay of the delay line 12 was 64 μs.

The video signal in the channel B was of a conventional type, with the exception of the line blanking at 0,35 V, inasmuch as U and V have a zero average value. The Y, U and V signals were conventional PAL signals, i.e.:

$$Y = 0,30 \ E_R' + 0,59 \ E_V' + 0,11 \ E_B'$$

$$U = k_U(E_B' - E_Y') \text{ with } K_U = 0,493$$

$$V = k_V(E_R' - E_Y') \text{ with } k_V = 0,877$$

The values of the $k_U$ and $k_V$ coefficients can be anyway changed without departing from the scope of the invention.

$E_R'$, $E_V'$ and $E_B'$ are the γ corrected R, G and B signals respectively.

The delay line 12, since it must operate in baseband, must be made with CCD (charge-coupled devices) techniques.

In the described apparatus the sequential switch 5 of the transmitter selects, on alternate lines, U or V. The switch 8 of the receiver exchanges the inputs with one another with a line frequency so that always U and always V appears at the output. The correct switching phase is derived from the NTSC, PAL or SECAM alternance, or from the vertical synchronism.

## Claims

1. A compatible method of transmitting color television signals on two channels for broadcasting from satellite, characterized in that it comprises the steps of transmitting on the first channel the complete color television signal and on the second channel the baseband chrominance R—Y and B—Y signals from 0 to about 3 MHz sequentially on alternate lines and from 3 MHz up to the limit of the video band the high frequency components of the luminance signal.

2. An apparatus comprising a transmitter and a receiver for carrying out the method as claimed in claim 1, characterized in that the transmitter comprises a NTSC, PAL or SECAM encoder (1) having three inputs for application thereto of the three signals Y, U and V and an output connected to the transmitting apparatus for the first channel (A) and an adder (2) having two inputs, one of which is connected to the output of a high pass filter (3) having the signal Y applied to its input whereas the other is connected to the output of a sequential switch (4, 5) having two inputs for application thereto of the signals V and U, and the receiver comprises a matrix (6) having three inputs, one of which is connected to the adder (7) and the other two are each connected to an output of a switch (8), the adder having two inputs, one of which is connected to the output of a low pass filter (9) having the signal received on the first channel applied thereto and the other is connected to the output of a high pass filter (10) having the signal received on the second channel applied thereto, the switch (8) having two inputs, one of which is connected directly to the output of a second low pass filter (11) having the signal received on the second channel applied to its input, and the other is connected to said output of the filter through a 64 μs delay line (12), the receiver comprising also a NTSC, PAL or SECAM alternance detector (13) having the signal received on the first channel applied to its input and having the output connected to a third input of the switch (8).

## Patentansprüche

1. Kompatibles Verfahren für die Uebertragung von Farbfernsehsignalen zur Abstrahlung von einem Satelliten, dadurch gekennzeichnet, daß es die Stufen der Uebertragung des kompletten Farbfernsehsignals auf dem ersten Kanal und die der zeilenweise alternierenden Uebertragung der (R—Y)- und (B—Y)-Basisband-Chrominanzsignale von 0 bis etwa 3 MHz sequentiell und von 3 MHz bis zur Grenze des Videobandes der Hochfrequenzkomponenten des Luminanzsignales auf dem zweiten Kanal umfaßt.

2. Gerät, bestehend aus einem Sender und einem Empfänger, zur Durchführung des Verfahrens nach Anspruch 1, dadurch gekennzeichnet, daß der Sender einen NTSC-, PAL- oder SECAM-Encoder (1) mit drei Eingängen zur Anlegung der drei Signale Y, U und V und einen an den Sender für den ersten Kanal (A) angeschlossenen Ausgang sowie einen Addierer (2) mit zwei Eingängen aufweist, von denen einer an den Ausgang eines Hochpasses (3), an dessen Eingang das Signal Y liegt, angeschlossen ist, wogegen der andere an den Ausgang eines Umschalters (4, 5) mit zwei Eingängen für die Zuführung der Signale V und U angeschlossen ist, und daß der Empfänger eine Matrix (6) mit drei Eingängen aufweist, von denen einer an den Addierer (7) angeschlossen ist und die anderen zwei jeweils an einen Ausgang eines Schalters (8) angeschlossen sind, wobei der Addierer zwei Eingänge besitzt, von denen einer an den Ausgang eines Tiefpasses (9) angeschlossen ist, der das Signal auf dem ersten daran anliegenden Kanal übernimmt, und der andere mit dem Ausgang eines Hochpasses (10) verbunden ist, der das Signal auf dem zweiten daran anliegenden Kanal übernimmt, welcher Schalter (8) zwei Eingänge besitzt, von denen einer direkt an den Ausgang eines zweiten Tiefpasses (11) angeschlossen ist, der das Signal auf dem zweiten, an seinem Eingang liegenden Kanal übernimmt, und der andere Eingang mit dem Ausgang des Filters durch eine Verzögerungsleitung (12) von 64 µs verbunden ist, wobei der Empfänger auch einen Detektor (13) für die NTSC-PAL- oder SECAM-Umschaltung besitzt an dessen Eingang das auf dem ersten Kanal erhaltene Signal übernommen wird und an dem Ausgang dessen der dritte Eingang des Umschalters (8) angeschlossen ist.

**Revendications**

1. Méthode compatible d'émission de signaux de télévision en couleur sur deux canaux pour la transmission par satellite, caractérisée en ce qu'elle consiste à transmettre sur un premier canal le signal complet de télévision en couleur et sur un second canal les signaux R—Y et B—Y de la bande de base de chrominance compris entre 0 et environ 3 MHz séquentiellement sur des lignes alternées et les composants haute fréquence du signal de luminance de 3 MHz jusqu'à la limite de la bande vidéo.

2. Dispositif comportant un émetteur et un récepteur pour la mise en oeuvre de la méthode suivant la revendication 1, caractérisé en ce qu'il comporte un codeur (1) du type NTSC. PAL ou SECAM, ayant trois entrées auxquelles sont appliquées les trois signaux Y, U et V et une sortie raccordée à l'émetteur pour le premier canal (A), ainsi qu'un dispositif d'addition (2) pourvu de deux entrées dont l'une est raccordée à la sortie d'un filtre passe-haut (3) à l'entrée duquel est appliqué le signal Y, alors que l'autre est raccordée à la sortie du commutateur séquentiel (4, 5) à deux entrées destinées à recevoir les signaux V et U, et un récepteur comprenant une matrice (6) munie de trois entrées dont l'une est raccordée au dispositif d'addition (7) et chacune des deux autres est raccordée à une sortie d'un commutateur (8), ledit dispositif d'addition ayant deux entrées dont l'une est raccordée à la sortie d'un filtre passe-bas (9) auquel est appliqué le signal reçu sur le premier canal, et l'autre est raccordée à la sortie d'un filtre passe-haut (10) auquel est appliqué le signal reçu sur le second canal, le commutateur (8) possédant deux entrées dont l'une est raccordée directement à la sortie d'un second filtre passe-bas (11) auquel est appliqué le signal reçu sur le second canal, et dont l'autre est raccordée à ladite sortie dudit filtre à travers une ligne retard (12) de 64 µs, le récepteur comportant également un détecteur (13) d'alternances NTSC, PAL ou SECAM à l'entrée duquel est appliqué le signal reçu sur le premier canal et à la sortie duquel est raccordée la troisième entrée du commutateur (8).

FIG. 1

EP 0 099 341 B1